# EUROPEAN PATENT APPLICATION

(11) **EP 4 715 432 A1**
(43) Date of publication of application: **25.03.2026**
(21) Application number: 24201918.0
(22) Date of filing: 23.09.2024
(51) Int. Cl.: G02B 5/00, G02B 27/10, G02B 27/14

(54) **DICHROIC PRISM ASSEMBLY, MEDICAL IMAGING DEVICE AND METHOD FOR DETECTING LIGHT**

(71) Applicant: Quest Photonic Devices B.V., 1771 SR Wieringerwerf (NL)
(72) Inventor: MOOIJ, Joris, 1768 BN Barsingerhorn (NL); BEUKEMA, Glenn, 1705 DD Heerhugowaard (NL); VAN ELSAS, Luca, 1679 XR Midwoud (NL)
(74) Representative: Seemann & Partner Patentanwälte mbB

(57) **Abstract**

The invention relates, inter alia, to a dichroic prism assembly (10) configured to receive incident light from an object image through an entrance face (22) of the dichroic prism assembly (10), the dichroic prism assembly (10) comprising a first prism (P3) and a further dichroic prism assembly (12) comprising one or more further prisms (P5, P6, P7), the further dichroic prism assembly (12) being suitable for splitting light into two or more light components (J, M, O), wherein the dichroic prism assembly (10), in particular the further dichroic prism assembly (12), comprises a stray light shield (30) for protecting a shielded face (32) of the dichroic prism assembly (10), in particular of the further dichroic prism assembly (12), from stray light, wherein the stray light shield (30) comprises an opaque cover sheet (34) configured to block stray light, wherein the cover sheet (34) is arranged at the shielded face (32) such that an air gap (36) is formed between the cover sheet (34) and the shielded face (32).

## Description

The invention relates to a dichroic prism assembly, medical imaging device as well as a method for detecting light from an object image using a medical imaging device.

Imaging has developed into an important and powerful tool, and is in particular used to assist surgical procedures. Optical imaging during surgery allows the medical staff to acquire more information about the patient and its current status as well as to perform precise treatment. For example, in open surgery, optical imaging may provide zoom-ins and magnifications of a surgical area, enhancing a surgeon's vision. In endoscopic or laparoscopic surgery, optical imaging using an endoscope or laparoscope makes it possible to visually inspect the surgical area in the first place.

A significant technique of optical imaging used in the context of medical procedures is fluorescence imaging, in particular fluorescence endoscopy or fluorescence guided surgery. This technique uses specialized fluorescent dyes, which are excited by at least one excitation light source, to label and highlight certain structures of a surgical area. Typically, excitation wavelengths are in the near infrared, e.g., in a range of 800 nanometers to 1100 nanometers, or in other cases in the visible spectrum, depending on the dye. Surgical staff usually is provided with both an image of the fluorescence emission as well as a standard camera image obtained under white light illumination.

A suitable tool for acquiring simultaneous images of multiple wavebands are multi-sensor cameras. In one embodiment of a multi-sensor camera, a multispectral prism camera, incoming light from a single optical path is split by a prism or a prism assembly into two or more separate paths, on which it continues to propagate towards separate sensors. Usually, optical coating is placed between prisms, wherein an optical coating has a reflectance and a wavelength sensitivity adjusted to the wavelengths to be reflected and to be transmitted. Alternatively, beam splitters may be used to split off a channel of interest to a side and let the rest pass through. These optical elements allow to record images of different light components, such as red, blue, green as well as near infrared (NIR).

Even for detecting a white light image, consisting of components red, blue and green, it may be suitable to use three separate sensors. In this manner, sensor settings such as exposure time, sensitivity and/or framerate may be adapted specifically to the waveband that is recorded.

Optical assemblies comprising prisms and beam splitters allowing to measure multiple light components, e.g., four or five light components, require complex design to ensure that all sensors are in the same focal plane. With increasing "stacking" of prisms and beam splitters, mechanical and optical constraints are increasingly difficult to coordinate in limited space with sufficient precision, e.g. within an endoscope.

Furthermore, another drawback of stacking prisms is that such stacked prisms rely on total internal reflection, which requires an air gap neighboring the prism's face where light is internally reflected. It follows from basic physics that an air gap is required and, e.g., a mirror coating is not sufficient to achieve the same effect. Only an air gap allows for total internal reflection, while for other external media the evanescent wave of the light is partially absorbed in the external medium, causing an attenuated total reflectance.

US 9 173 554 discloses a dichroic prism assembly allowing for three light components to be detected by three separate sensors. In order to detect a fourth component for infrared fluorescence radiation, one optical path is used to detect both red and infrared light in time alternating fashion.

EP 3 410 918 B1 discloses a dichroic prism assembly with five channels, comprising a first prism and a further dichroic prism assembly for splitting light in three light components, the first prism having a cross section with at least five corners, each corner having an inside angle of at least 90 degrees.

EP 3 646 772 B1 relates to an endoscope comprising, in a distal part, a dichroic prism assembly configured to receive light from an object image through an entrance face of the dichroic prism assembly, the dichroic prism assembly comprising a first prism (P3) and a further dichroic prism assembly for splitting light in three light components, the first prism having a cross section with at least five corners, each corner having an inside angle of at least 90 degrees.

WO 2018/164579 A1 discloses a method for detecting visible and infrared light using a medical imaging system.

In any optical system the signal-to-noise ratio of optical data acquired by a sensor is impaired by light pollution by light which does not contribute to imaging the mapped object. For example, light being reflected or transmitted not as planned along a main optical path may change image quality for the worse. Furthermore, light entering the optical assembly other than through a planned entrance face will corrupt image quality. Light pollution may set limits on the dynamic range of the optical system, to the signal-to-noise ratio or a contrast ratio by limiting how dark a system can be.

In the context of the aforementioned, it is an object of the invention to improve the quality of optical imaging using a dichroic prism assembly suitable for splitting light into at least two light components, in particular to improve the signal-to-noise ratio and/or the contrast ratio.

The object is solved by a dichroic prism assembly configured to receive incident light from an object image through an entrance face of the dichroic prism assembly, the dichroic prism assembly comprising a first prism and a further dichroic prism assembly comprising one or more further prisms, the further dichroic prism assembly being suitable for splitting light into two or more light components, wherein the dichroic prism assembly, in particular the further dichroic prism assembly, comprises a stray light shield for protecting a shielded face of the dichroic prism assembly, in particular of the further dichroic prism assembly, from stray light, wherein the stray light shield comprises an opaque cover sheet configured to block stray light, wherein the cover sheet is arranged at the shielded face such that an air gap is formed between the cover sheet and the shielded face.

A basic idea of the invention is to provide light pollution protection without impinging on optical imaging quality. Namely, a stray light shield is arranged at at least one face of a prism of the dichroic prism assembly. In particular, the stray light shield is configured both to protect a shielded face from stray light by a cover sheet and to conserve optical properties by providing an air gap adjacent to the shielded face. In an embodiment, in which light experiences internal reflection at the shielded face, an air gap is particularly advantageous as an air gap is required for total internal reflection without absorption of the evanescent wave.

A dichroic prism assembly is an assembly of at least two prisms, wherein at least one coating with dichroic properties is arranged between two prisms of the dichroic prism assembly. In particular, a dichroic material is a material which causes visible light to be split up into distinct beams of different wavelengths or one in which light rays having different polarizations are absorbed by different amounts.

The dichroic prism assembly may comprise features of a dichroic prism assembly according to EP 3 410 918 A1, additionally comprising a stray light shield as described above. Explicit reference is made to EP 3 410 918 A1, which is included in this disclosure.

In an embodiment, the first prism is arranged optically between the entrance face and the further dichroic prism assembly. In particular, the first prism comprises the entrance face.

Stray light is light in an optical system that was not intended in the design and does not adhere to a nominal optical path. The light may be from the intended source, such as the imaged object, but follows paths other than intended. The light may also be from a source other than that intended. For example, stray light may comprise light emitted by components of the optical system, in particular in the infrared range due to thermal radiation, by reflections from lens surfaces, by diffuse reflection from imperfect mirror surfaces and/or light leaks in the enclosure of the optical system.

Imaging quality is enhanced, if the dichroic prism assembly comprises a compensator prism between the first prism and the further dichroic prism assembly. In particular, a compensator prism may be configured such that in combination with the first prism a flat exit face for the light is created. Furthermore, by choosing the width of the compensator prism, matching path lengths for all light components and corresponding sensors may be adjusted.

More information may be obtained from imaging using the dichroic prism assembly, if the further dichroic prism assembly comprises at least three further prisms and is suitable for splitting light into at least three light components. This allows for recording of multiple light components, such as red, green, blue or infrared and offers more information about the imaged object. In particular, the stray light shield is configured to protect at least one of the three further prisms from stray light.

Precise control of transmission of light along a main optical path of the dichroic prism assembly as well as protection from stray light is achieved, if the shielded face is a face of one of the three further prisms and comprises both a portion being adjacent to another of the three further prisms and another portion not adjacent to another prism. The portion adjacent to another of the three further prisms may be used for light being transmitted into or from a prism adjacent to the prism comprising the shielded face. The portion not adjacent to another prism, e.g., adjacent to air, may be used for light being transmitted from the prism comprising the shielded face to a sensor or may be shielded by the stray light shield.

The optical properties of the dichroic prism assembly are conserved well if the dichroic prism assembly, in particular the further dichroic assembly, is configured such that at the shielded face at least one of the two or more light components is reflected by internal reflection. To this end, the air gap provided by the stray light shield allows for the internal reflection at the shielded face while blocking stray light by the cover sheet. In particular, at the shielded face at least one of the three light components split in the further dichroic prism assembly is reflected by internal reflection. In particular, light following a main optical path through the dichroic prism assembly is reflected by internal reflection at a shielded face.

In an embodiment, the dichroic prism assembly comprises a single stray light shield or multiple stray light shields, wherein the single stray light shield is or the multiple stray light shields are configured to protect multiple shielded faces from stray light.

Optical imaging quality is enhanced, if the shielded face is oriented parallel to the entrance face of the dichroic prism assembly and/or parallel to an exit face of the compensator prism. Often a high amount of stray light originating from the original light source propagates in the direction parallel to the entrance face and/or parallel to an exit face of the compensator prism. Therefore, using the stray light shield for a shielded face in such an orientation may block a significant amount of stray light.

Further light is blocked and therefore image quality is further enhanced, if the stray light shield is configured to cover a first portion of the shielded face and to spare a second portion of the shielded face, wherein in particular the spared second portion of the shielded face is arranged to face directly the first prism or the compensator prism, in particular an exit face of the first prism or of the compensator prism. This way, the shielded face may be covered in a region where no light is supposed to enter or leave the prism, while in another region light can enter or exit the prism. In particular, such design is preferred for a shielded face facing the first prism or compensator prism.

Stray light is further reduced, if at least one face of the dichroic prism assembly, in particular the further dichroic prism assembly, is coated by black coating for reducing incident stray light, wherein in particular all faces of the further dichroic prism assembly not being part of an optical path from an object image to light detecting sensors as well as not reflecting at least one of the two or more light components by internal reflection are coated by black coating. Black coating reduces incident stray light, as it absorbs the light before it may enter into a prism. A coating is easy to apply, however, a drawback of black coating is that it may attenuate internal reflection of the light propagating within the prism. Therefore, in an embodiment, all faces, which may be called passive faces, that are both not part of a main optical path and that are not needed for internal reflection are coated by black coating. Optionally, all faces of the further dichroic prism assembly at least partially adjacent to air are at least one of coated by black coating, shielded by a stray light shield and used for transmission of light from the object image to a sensor.

In particular, a black coating may have a reflectance below 1 %. Black coatings may be fabricated by at least one of a polymer material, acrylic and carbon nanotubes. In an embodiment, a black coating may be inorganic, e.g., being applied in an anodizing process or by chemical etching.

Further improvement of the optical properties of the dichroic prism assembly may be achieved, if at least one face of the further dichroic prism assembly is coated by a non-black coating, in particular an anti-reflective coating, wherein in particular all faces of the further dichroic prism assembly at least partially adjacent to air are coated by at least one of black coating and antireflective coating. For example, antireflective coating increases transmission of an optical element and may enhance the amount of light being kept in the optical path instead of being reflected and omitted.

A simple construction of the stray light shield is possible if a cross section of the stray light shield along a main optical path is L-shaped, wherein in particular a long portion of the L-shape is oriented parallel to the shielded face, and/or if the cover sheet is oriented parallel to the shielded face. In an embodiment, a short portion of the L-shaped stray light shield is connected to the prism comprising the shielded face, in particular to the shielded face. For example, the cover sheet may be made from at least one of metal, plastics, ceramics, and composite materials.

An easy construction or a simple upgrade of an assembly may be achieved, if the stray light shield comprises a holder configured to arrange the cover sheet in a fixed position with respect to the first prism and/or the further dichroic prism assembly, wherein in particular the holder is attached or attachable to an end of the shielded face and/or a prism's edge confining the shielded face. A holder may act as component to connect the cover sheet and the prism comprising the shielded face. In particular, the holder is configured to arrange the cover sheet in a fixed position with respect to at least one of the three further prisms.

More stray light is blocked, if the dichroic prism assembly comprises at least two stray light shields, wherein the first prism comprises at least one shielded face shielded by at least one stray light shield and the further dichroic prism assembly comprises at least one shielded face shielded by at least one stray light shield. In particular, at least one stray light shield is mounted to the first prism and at least one stray light shield is mounted to the further prisms of the further prism assembly.

In an embodiment, a first side of the first prism is provided with a first sensor, wherein each prism of the further dichroic prism assembly being provided with a sensor. A sensor allows for measuring the light transmitted through the prisms of the dichroic prism assembly.

A compact and efficient design of the dichroic prism assembly is achieved, if the first prism has a cross section with at least five corners, each corner having an inside angle of at least 90 degrees. In particular, the first prism may have a pentagonal shape.

The imaging quality of the dichroic prism assembly is further increased, if the corners of the first prism are designed so that an incoming beam which enters the entrance face in a direction parallel to a normal of said entrance face is partially reflected twice inside the first prism and exits the first prism through an exit face parallel to a normal of said exit face, in particular towards the first sensor, wherein in particular the normal of the entrance face and the normal of the exit face are perpendicular to each other.

Images obtained with different wavelengths of light are better comparable, if a first path length travelled by the part of the incoming beam reflected twice inside the first prism towards the first sensor is the same as path lengths travelled by a part of the incoming beam not reflected inside the first prism and entering the further dichroic prism assembly towards each of its three sensors, taking into account an adjustment for focal plane focus position difference in wavelengths to be detected at the first sensor and the further three sensors.

Furthermore, the object is also solved by a medical imaging device, in particular an endoscope or a laparoscope or an open lens system, comprising, in particular in a distal part, a dichroic prism assembly as described above.

Moreover, the object is also solved by a method for detecting light from an object image using a medical imaging device as described above.

Besides, the object is also solved by a surgical method comprising imaging a surgical area using a medical imaging device as described above.

The medical imaging device, the method for detecting light as well as the surgical method have the same technical effects and advantages as described above for the dichroic prism assembly. For the sake of brevity, reference is made to the remarks above.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic view of a dichroic prism assembly according to the prior art,
- Fig. 2: a schematic cross-section view of a first embodiment of a dichroic prism assembly,
- Fig. 3: a schematic cross-section view of a second embodiment of a dichroic prism assembly,
- Fig. 4: a schematic side view of the first embodiment of a dichroic prism assembly, and
- Fig. 5: a schematic view of an embodiment of a medical imaging device.

In the drawings, the same or similar types of elements or respectively corresponding parts are provided with the same reference numbers in order to prevent the item from needing to be reintroduced.

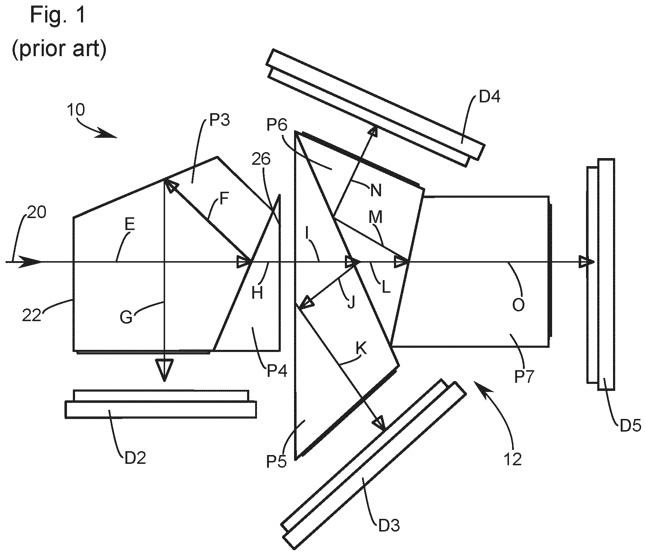

Figure 1 shows a schematic view of a dichroic prism assembly 10 according to the prior art. This assembly is, e.g., further described in EP 3 410 918 A1. The dichroic prism assembly 10 comprises a first prism P3, a compensator prism P4 as well as a further dichroic prism assembly 12. The further dichroic prism assembly 12 comprises three further prims P5, P6, P7 for splitting light in three light components, e.g., red, green and blue components, towards respective sensors D3, D4, D5. In another embodiment, the three light components may comprise near-infrared light. For example, at least one of the three light components may be measured by a RGB Bayer sensor.

Light 20 from an object enters the dichroic prism assembly 10 through an entrance face 22 of the first prism P3, as indicated by the arrow. The incoming light beam E is partially reflected at the interface to the compensator prism P4 due to a dichroic coating at the interface. The reflected beam F is then reflected to a face of the first prism P3, which adjoins the entrance face 22. In an embodiment, the angle of reflection may be below the critical angle, so that the reflection is not internal. In another embodiment, the angle of reflection may be higher than the critical angle, causing total internal reflection between reflected light beams F, G. Subsequently, the reflected beam G crosses the original light beam E and exits the first prism P3 towards a sensor D2. Another part of the incoming light beam E is not reflected at the interface between prisms P3, P4 and is transmitted into the compensator prism P4. In particular, there is no air gap between the first prism P3 and the compensator prism P4.

The compensator prism P4 may be used for modifying the optical path length of the light beam H. The compensator prism P4 may be fixed in position or may be movable perpendicular to the main optical axis, i.e., perpendicular to light beam H. Furthermore, without any movement of the compensator prism P4, its dimensions, such as width, and/or the material with its optical properties may allow for tuning the optical path length. Tuning the optical path length may be desirable to achieve comparable images being measured by sensors D2, D3, D4 and D5.

In the depicted embodiment, an air gap is arranged between the compensator prism P4 and the further dichroic prism assembly 12, in particular the first further prism P5. This allows for an internal reflection at the entrance face of prism P5 without loss due to absorption of the evanescent wave.

The incoming light beam I enters the first further prism P5. Between prisms P5 and P6, an optical coating is placed, such that the light beam I is partially reflected at the interface. Another optical coating is placed between prisms P6 and P7, wherein in particular coatings with different reflectance and/or wavelength sensitivities are used at the interfaces between prisms P5 and P6 and prisms P6 and P7, respectively.

Light beam J corresponds to the part of light beam I that is partially reflected at the interface between prisms P5 and P6. It is reflected back towards the entrance face of the first further prism P5 at an angle. At this face, subsequently, the light beam J is reflected by total internal reflection towards sensor D3 as light beam K.

In a similar fashion, sensor D4 receives light from light beam L reflected by a coating between the prisms P6 and P7 via light beams M and N. The light being transmitted through both coatings between prisms P5 and P6 as well as P6 and P7 is detected by sensor D5 as light beam O.

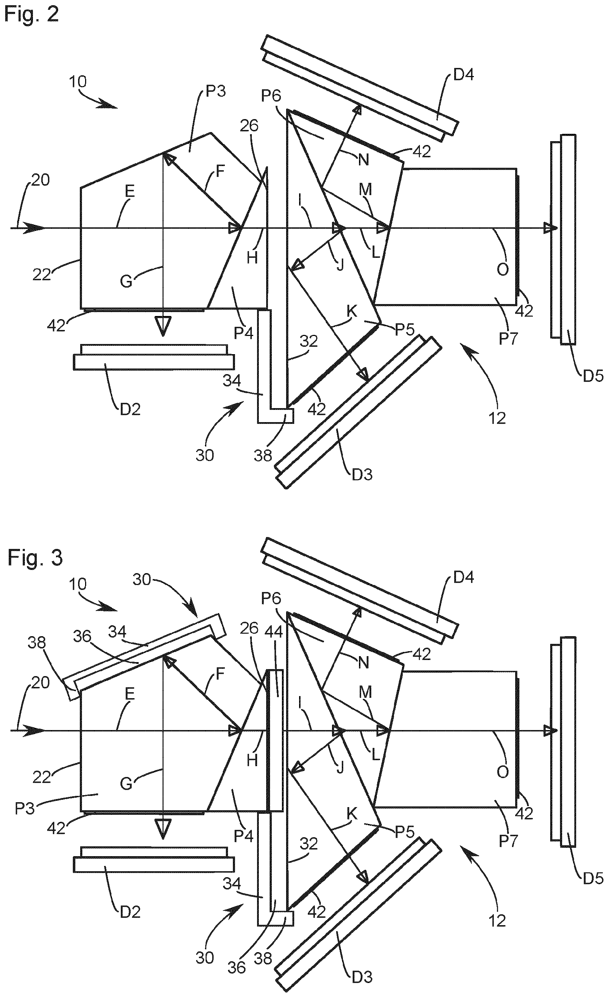

Figure 2, being based on Fig. 1, depicts a schematic cross-section view of a first embodiment of a dichroic prism assembly 10 according to the invention. It comprises a first prism P3, a compensator prism P4 as well as a further dichroic prism assembly 12. The further dichroic prism assembly 12 comprises a stray light shield 30 protecting a shielded face 32 of the first further prism P5 from stray light. The shielded face 32 may be a part of the entrance face of the first further prism P5.

The stray light shield 30 comprises a cover sheet 34, wherein the cover sheet 34 is oriented parallel to the shielded face 32. A holder 38 connects the cover sheet 34 and the prism P5, such that the cover sheet 34 is held in a fixed position. In this embodiment, the holder 38 is attached to an end of the shielded face 32, which is also an edge of prism P5 confining the shielded face 32.

The arrangement of the cover sheet 34 and the prism P5 provides an air gap 36 between the cover sheet 34 and the prism P5. In other words, the stray light shield 30 provides the shielded face 32 with a miniature darkroom. Thus, the total internal reflection from light beam J to light beam K at the shielded face 32 may occur without attenuation due to frustrated internal reflection, at the same time shielding any external light from entering prism P5 through shielded face 32 as stray light.

In this embodiment, the stray light shield 30 is L-shaped in the depicted cross section along the main optical path. The long portion of the L-shape of the stray light 30 is oriented parallel to the shielded face 32. Furthermore, the cover sheet 34 is oriented parallel to the shielded face.

In particular, the stray light shield 30 is arranged to be in contact with compensator prism P4. This allows to close any gap between the stray light shield 30 and the compensator prism P4, reducing the light entering the shielded face 32 from outside of the dichroic prism assembly 10.

In this embodiment, the exit faces of the prisms P3, P5, P6, P7 towards the sensors D2, D3, D4 and D5 are coated with a coating 42. For example, the coating 42 may be an anti-reflective coating. This maximizes the light intensity being obtained by the sensors D2, D3, D4, D5.

Figure 3 shows a schematic cross-section view of a second embodiment of a dichroic prism assembly 10. This embodiment resembles the first embodiment depicted in Fig. 2. In addition, the second embodiment of the dichroic prism assembly 10 comprises a glass compensator 44 between the compensator prism P4 and the first further prism P5. In particular, the compensator prism P4 and the first further prism P5 are arranged such that an air gap is formed. This allows for internal reflection within prism P5. In other embodiments, an air gap between compensator prism P4 and the first further prism P5 may be filled with at least one of a filter and a glass compensator. This may enhance imaging quality, in particular by shifting the focus and/or compensating differences in the length of optical paths.

Moreover, the second embodiment, as depicted in Fig. 3, comprises a second stray light shield 30, which is positioned at the first prism P3. In particular, the second stray light shield 30 is arranged at a face adjacent to the entrance face 22 of the first prism P3. This allows for a reflection from light beam F to light beam G to be an internal reflection, while the first prism P3 is protected from stray light. Here, there are two holders 38 attached to the first prism P3, one at each end of the second shielded face, i.e., the face where light beam F is reflected to light beam G.

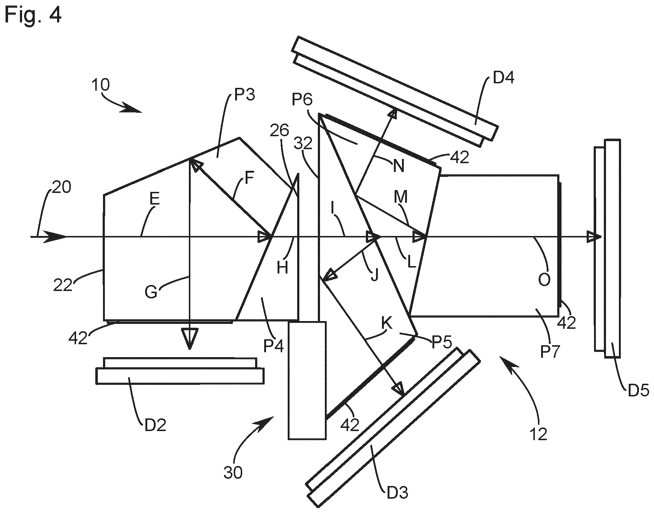

Figure 4 shows a schematic side view of the first embodiment of a dichroic prism assembly 10, the same dichroic prism assembly 10 is depicted as in Fig. 2. For the sake of comparability, the light beams E, F, G, H, I, J, K, L, M, N, O are also shown in Fig. 4.

Fig. 4 shows the stray light shield 30 in a side view. In addition to a cover sheet 34 parallel to the shielded face 32, the stray light shield 30 may comprise side sheets oriented perpendicular to the cover sheet 34. In the perspective of Fig. 4, the side sheets are shown, such that the air gap 36 is not depicted. In particular, a holder 38 may comprise side sheets.

For example, the stray light shield 30 may have a cuboid shape, wherein predetermined faces of the cuboid shape are missing. In other words, the stray light shield 30 may have the form of an incomplete, right-angled box that is attached to the shielded face 32, in particular to the first further prism P5.

In addition to at least one stray light shield 30, a dichroic prism assembly 10 may comprise at least one black coating of at least one face of a prism P3, P4, P5, P6, P7. For example, the faces of prism P7 parallel to the light beam O may be coated in black in order to protect from stray light. Other than, e.g., the entrance surface of the first further prism P5, these surfaces of prism P7 are not required for internal reflection and therefore no air gap is necessary for imaging.

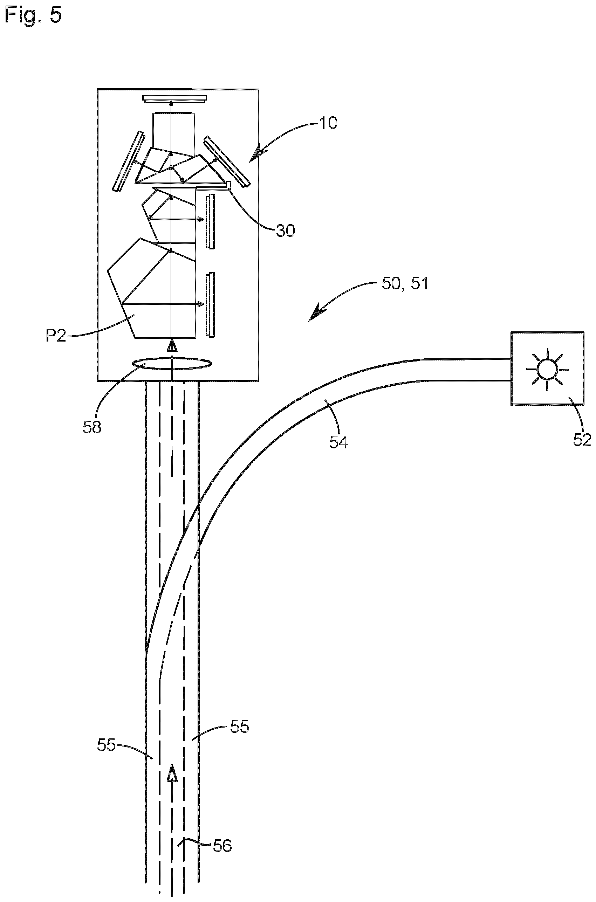

Figure 5 shows a schematic view of an embodiment of a medical imaging device 50 comprising a dichroic prism assembly 10. In this embodiment, the medical imaging device is an endoscope 51.

A light source 52 illuminates an object (not shown) via optic fibres 54, 55. Light reflected from the object is transmitted via another optic fiber 56 to a lens 58 which focuses the light into the dichroic prism assembly 10. Here, the dichroic prism assembly 10 comprises a first prism P3, a compensator prism P4 as well as a further dichroic prism assembly 12 comprising a stray light shield 30. Furthermore, the dichroic prism assembly 10 comprises an additional prism P2 with an additional sensor and a similar optical path as in the first prim P3.

In this embodiment, the dichroic prism assembly 10 is arranged at a proximal end of the endoscope 51. In another embodiment, the dichroic prism assembly 10 may be arranged at a distal end of the endoscope 51.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 10: dichroic prism assembly
- 12: further dichroic prism assembly
- 20: light from object
- 22: entrance face
- 26: exit face of compensator prism P4
- 30: stray light shield
- 32: shielded face
- 34: cover sheet
- 36: air gap
- 38: holder
- 42: coating
- 44: glass compensator
- 50: medical imaging device
- 51: endoscope
- 52: light source
- 54: optic fiber
- 55: optic fiber
- 56: optic fiber
- 58: lens
- E, F, G: light beam within P3
- H: light beam within P4
- I, J, K: light beam within P5
- L, M, N: light beam within P6
- O: light beam within P7
- P2: prism
- P3: first prism
- P4: compensator prism
- P5: first further prism
- P6: second further prism
- P7: third further prism
- D2: first sensor
- D3: first further sensor
- D4: second further sensor
- D5: third further sensor

## Claims

1. A dichroic prism assembly (10) configured to receive incident light from an object image through an entrance face (22) of the dichroic prism assembly (10), the dichroic prism assembly (10) comprising a first prism (P3) and a further dichroic prism assembly (12) comprising one or more further prisms (P5, P6, P7), the further dichroic prism assembly (12) being suitable for splitting light into two or more light components (J, M, O), wherein the dichroic prism assembly (10), in particular the further dichroic prism assembly (12), comprises a stray light shield (30) for protecting a shielded face (32) of the dichroic prism assembly (10), in particular of the further dichroic prism assembly (12), from stray light, wherein the stray light shield (30) comprises an opaque cover sheet (34) configured to block stray light, wherein the cover sheet (34) is arranged at the shielded face (32) such that an air gap (36) is formed between the cover sheet (34) and the shielded face (32).

2. Dichroic prism assembly (10) according to claim 1, wherein the dichroic prism assembly (10) comprises a compensator prism (P4) between the first prism (P3) and the further dichroic prism assembly (12).

3. Dichroic prism assembly (10) according to claim 1 or 2, wherein the further dichroic prism assembly (12) comprises at least three further prisms (P5, P6, P7) and is suitable for splitting light into at least three light components (J, M, O).

4. Dichroic prism assembly (10) according to claim 3, wherein the shielded face (32) is a face of one of the three further prisms (P5, P6, P7) and comprises both a portion adjacent to another of the three further prisms (P5, P6, P7) and another portion not adjacent to another prism.

5. Dichroic prism assembly (10) according to one of the claims 1 to 4, wherein the dichroic prism assembly (10), in particular the further dichroic prism assembly (12), is configured such that at the shielded face (32) at least one of the two or more light components is reflected by internal reflection.

6. Dichroic prism assembly (10) according to one of the claims 1 to 5, wherein the shielded face (32) is oriented parallel to the entrance face (22) of the dichroic prism assembly (10) and/or parallel to an exit face (26) of the compensator prism (P4).

7. Dichroic prism assembly (10) according to one of the claims 1 to 6, wherein the stray light shield (30) is configured to cover a first portion of the shielded face (32) and to spare a second portion of the shielded face (32), wherein in particular the spared second portion of the shielded face (32) is arranged to face directly the first prism (P3) or the compensator prism (P4), in particular an exit face (26) of the first prism (P3) or of the compensator prism (P4).

8. Dichroic prism assembly (10) according to one of the claims 1 to 7, wherein at least one face of the dichroic prism assembly (10), in particular the further dichroic prism assembly (12) is coated by black coating for reducing incident stray light, wherein in particular all faces of the further dichroic prism assembly (12) not being part of an optical path from an object image to light detecting sensors (D2, D3, D4, D5) as well as not reflecting at least one of the two or more light components by internal reflection are coated by black coating.

9. Dichroic prism assembly (10) according to one of the claims 1 to 8, wherein at least one face of the further dichroic prism assembly (12) is coated by a non-black coating, in particular an antireflective coating, wherein in particular all faces of the further dichroic prism assembly (12) at least partially adjacent to air are coated by at least one of black coating and antireflective coating.

10. Dichroic prism assembly (10) according to one of the claims 1 to 9, wherein a cross section of the stray light shield (30) along a main optical path is L-shaped, wherein in particular a long portion of the L-shape is oriented parallel to the shielded face (32), and/or wherein the cover sheet (34) is oriented parallel to the shielded face (32).

11. Dichroic prism assembly (10) according to one of the claims 1 to 10, wherein the stray light shield (30) comprises a holder (38) configured to arrange the cover sheet (34) in a fixed position with respect to the first prism (P3) and/or the further dichroic prism assembly (12), wherein in particular the holder (38) is attached or attachable to an end of the shielded face (32) and/or a prism's edge confining the shielded face (32).

12. Dichroic prism assembly (10) according to one of the claims 1 to 11, wherein the dichroic prism assembly (10) comprises at least two stray light shields (30), wherein the first prism (P3) comprises at least one shielded face (32) shielded by at least one stray light shield (30) and the further dichroic prism assembly (12) comprises at least one shielded face (32) shielded by at least one stray light shield (30).

13. Medical imaging device (50), in particular an endoscope (51) or a laparoscope or an open lens system, comprising, in particular in a distal part, a dichroic prism assembly (10) according to one of the claims 1 to 12.

14. Method for detecting light from an object image using a medical imaging device (50) according to claim 13.
